# EUROPÄISCHE PATENTSCHRIFT

(11) **EP 2 589 088 B1**
(45) Veröffentlichungstag und Bekanntmachung des Hinweises auf die Patenterteilung: **08.04.2015**
(21) Anmeldenummer: 11738577.3
(22) Anmeldetag: 01.06.2011
(51) Int. Cl.: H02S 30/20

(54) **ZUSAMMENKLAPPBARES SOLARMODUL**
FOLDABLE SOLAR MODULE
MODULE SOLAIRE REPLIABLE

(30) Priorität: 29.06.2010 AT 10972010
(43) Veröffentlichungstag der Anmeldung: 08.05.2013
(73) Patentinhaber: Smart Flower Energy Technology GmbH, 7540 Güssing (AT)
(72) Erfinder: SCHÖNDORFER, Christoph, A-4786 Brunnenthal (AT); STÖGER, Elmar, A-2822 Bad Erlach (AT); SWATEK Alexander, 7540 Güssing (AT)
(74) Vertreter: Weiser, Andreas
(86) Internationale Anmeldenummer: PCT/AT2011/000249
(87) Internationale Veröffentlichungsnummer: WO 2012/000004

(56) Entgegenhaltungen:
- DE-A1- 10 062 607
- DE-A1-102009 022 610
- DE-U1- 29 501 583
- JP-A- 10 270 729
- US-A- 3 377 595
- US-A1- 2009 007 959
- US-A1- 2009 126 775
- US-A1- 2010 000 592

## Beschreibung

Die vorliegende Erfindung betrifft ein Solarmodul mit einer Vielzahl von lamellenförmigen Solarpaneelen, die um eine gemeinsame Achse verschwenkbar an einem länglichen Träger gelagert und zwischen einer ersten Stellung, in der sie im wesentlichen deckungsgleich und parallel zum Träger übereinanderliegen, und einer zweiten Stellung, in der sie um die genannte Achse aufgefächert im wesentlichen nebeneinanderliegen, bewegbar sind.

Solarmodule dieser Art sind beispielsweise aus der US 2009126775 A1 das als Stand der Technik angesehen wird, US 2004/0069341 A1, EP 1 885 038 A1, CN 2893950 Y oder der CN 201252107 Y bekannt und werden zur mobilen Speisung von elektrischen Kleingeräten wie Mobiltelefonen, Laptops usw. eingesetzt. Die bekannten Geräte sind als Hand- oder Tischgeräte ausgeführt, wobei die Solarpaneele in der Art eines Fächers aufgefächert und zu Transportzwecken zusammengeschoben werden können.

Die Erfindung setzt sich demgegenüber zum Ziel, ein Solarmodul zu schaffen, welches für einen stationären Einsatz im Freien geeignet ist, beispielsweise als Energieversorgungsanlage für ein Einfamilienhaus.

Dieses Ziel wird mit einem Solarmodul der eingangs genannten Art erreicht, das sich gemäß der Erfindung dadurch auszeichnet, daß der Träger aus einem Gehäuse, welches ihn mit den Solarpaneelen in der ersten Stellung aufnimmt, über eine verschließbare Öffnung desselben ausfahrbar ist, wobei das Gehäuse die Form einer flachen Schachtel hat, an deren Oberseite die genannte Öffnung liegt, und wobei der Träger im Gehäuse schwenkbar gelagert ist und in der eingefahrenen Stellung parallel zur und unter der Oberseite liegt und in der ausgefahrenen Stellung durch die Öffnung hindurchgeschwenkt ist. Auf diese Weise können die empfindlichen Solarpaneele in der Nacht oder bei schlechter Witterung, z.B. Sturm, Blitzschlag, Hagel oder starkem Regen, eingefahren werden, um sie vor Beschädigungen zu schützen. Das Solarmodul der Erfindung hat dabei eine geringe Einbautiefe, was seinen Einbau in den Boden oder eine Gebäudefassade oder -bedeckung begünstigt.

Aus der US 2010/0000592 A1 ist es an sich bekannt, ein Solarmodul aus mehreren linear verschieblichen Solarpaneelen mittels eines starr montierten Teleskoparms aus einem Fahrzeug nach oben auszuheben, wobei in der eingefahrenen Stellung des Teleskoparms der den Teleskoparm umgebende Fahrzeugraum ungenutzt ist.

In einer ersten bevorzugten Ausführungsform bildet das Gehäuse eine dichte Wanne zum oberseitig flächenbündigen Einbau in den Erdboden, sodaß die Solarpaneele in der eingefahrenen Ruhestellung allseitig geschützt sind, auch gegenüber Bodenfeuchtigkeit.

In einer alternativen bevorzugten Ausführungsform ist das Gehäuse mit Mitteln zum oberseitig flächenbündigen Einbau in eine Gebäudefassade oder ein Gebäudedach ausgestattet, wodurch vorhandene Gebäudeflächen zur Energiegewinnung ausgenützt werden können.

Gemäß einem weiteren bevorzugten Merkmal der Erfindung ist die Öffnung mit zumindest einem etwa parallel zur Gehäuseoberseite gleitenden Deckel verschließbar. Eine solche Deckelausführung benötigt wenig Platz zum Öffnen und behindert im geöffneten Zustand nicht das Ausfahren und die Bewegungen der Solarpaneele.

Besonders günstig ist es, wenn der Deckel eine flache bepflanzbare Wanne bildet, wodurch das Solarmodul unauffällig und geschützt in eine Gartenfläche oder Grünanlage integriert werden kann. Die Bepflanzung des Deckels bildet gleichzeitig eine thermische Isolierung.

Gemäß einer weiteren vorteilhaften Ausführungsform der Erfindung ist zumindest ein Solarpaneel auf seiner Rückseite mit einer beim Auffächern auf dem darunterliegenden Solarpaneel abgleitenden Kehrlippe ausgestattet. Auf diese Weise wird gleichsam ein selbstreinigendes Solarmodul geschaffen: Beim Auffächern - und ebenso bei der gegenteiligen Bewegung - reinigt die Kehrlippe des einen Solarpaneeles die Oberfläche des benachbarten Solarpaneeles von Staub, Schnee, Regen, Blättern usw., sodaß eine optimale Leistungsfähigkeit der Solarpaneele auch bei wechselnden Witterungseinflüssen und im gesamten Jahresverlauf erhalten bleibt. Bevorzugt sind alle Solarpaneele mit Ausnahme des untersten mit einer solchen Kehrlippe versehen.

Zu demselben Zweck kann gemäß einem weiteren Merkmal der Erfindung vorgesehen werden, daß die Öffnung des Gehäuses mit einer beim Ausfahren des Trägers auf dem obersten der übereinanderliegenden Solarpaneele abgleitenden Kehrlippe ausgestattet ist, wodurch auch das oberste Solarpaneele selbsttätig gereinigt wird.

Alternativ kann diese Reinigungsfunktion erreicht werden, indem der Deckel mit einer bei seinem Öffnen auf dem obersten der übereinanderliegenden Solarpaneele abgleitenden Kehrlippe ausgestattet ist.

In jedem Fall ist es besonders günstig, wenn der Träger an seinem einen Ende einen Schwenkkopf zur Lagerung der Solarpaneele aufweist. Dadurch können die Solarpaneele in der aufgefächerten Stellung exakt auf die Sonne ausgerichtet werden. Bevorzugt wird dafür vorgesehen, daß der Träger und/oder der Schwenkkopf, falls ein solcher vorhanden, mit einem sonnenstandgesteuerten Antrieb zur automatischen Sonnennachführung der Solarpaneele ausgestattet ist/sind, um im Tages- und Jahresverlauf stets optimalen Wirkungsgrad zu erzielen.

Die Solarpaneele könnten grundsätzlich per Hand aus dem Gehäuse ausgefahren und aufgefächert werden und umgekehrt. Besonders vorteilhaft ist es jedoch, wenn die Solarpaneele mittels eines Elektroantriebs zwischen ihren Stellungen bewegbar sind und der Träger mittels eines Elektroantriebs ein- und ausfahrbar ist, sodaß der Betrieb des Solarmoduls automatisierbar ist. Die Solarpaneele können auf diese Weise z.B. bei ausreichendem Sonnenlicht und sicherer Witterung automatisch ausgefahren und aufgefächert, und bei Dunkelheit oder schlechter Witterung automatisch eingefächert und eingefahren werden.

Bevorzugt sind die Elektroantriebe Schneckentriebe, welche in Zahnkränze der angetriebenen Achsen eingreifen, was platzsparende Antriebe mit hoher Untersetzung zwischen Motordrehzahl und der Abtriebsdrehzahl ergibt.

Die Solarpaneele können grundsätzlich von jeder beliebigen in der Technik bekannten Art sein, welche eine Umwandlung von Sonnenlicht in ausnützbare Energie ermöglicht, beispielsweise mit in den Solarpaneelen zirkulierenden Wärmeübertragungsfluiden, welche vom Sonnenlicht erwärmt werden. Bevorzugt ist jedoch jedes Solarpaneel durch ein flächiges Array von photovoltaischen Solarzellen gebildet, um direkt elektrische Energie zu erzeugen. Dies erleichtert auch die Verschaltung der Solarpaneele untereinander und ihren Anschluß an den Träger bzw. den Schwenkkopf, weil hier lediglich elektrische Anschlüsse hergestellt werden müssen.

Die Erfindung wird nachstehend anhand eines in den beigeschlossenen Zeichnungen dargestellten Ausführungsbeispiels näher erläutert. In den Zeichnungen zeigt:
Fig. 1 das Solarmodul der Erfindung in der zusammengeschobenen und eingefahrenen Stellung in einer Perspektivansicht;
Fig. 2 das Solarmodul der Erfindung in der aufgefächerten und ausgefahrenen Stellung in einer Perspektivansicht;
die Fig. 3a bis 3f Perspektivansichten des Solarmoduls der Erfindung in aufeinanderfolgenden Phasen des Ausfahrens des Trägers und Auffächerns der Solarpaneele;
Fig. 4 einen der Antriebe des Solarmoduls in einer Seitenansicht;
Fig. 5 einen Schnitt durch zwei übereinanderliegende Solarpaneele zur Darstellung der Kehrlippe zwischen diesen; und
Fig. 6 eine Schnittansicht des Gehäuses und seiner Öffnung mit der Kehrlippe für das oberste Solarpaneel.

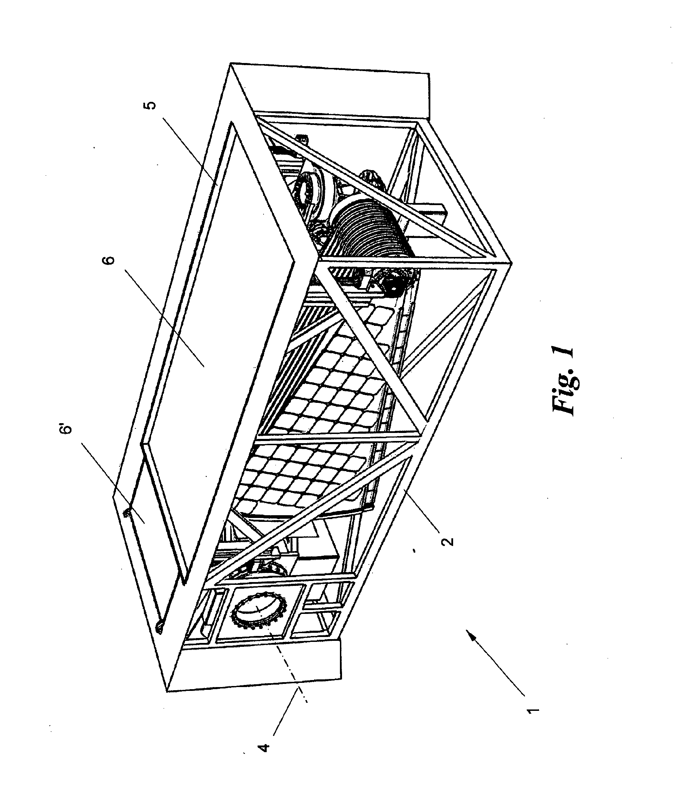

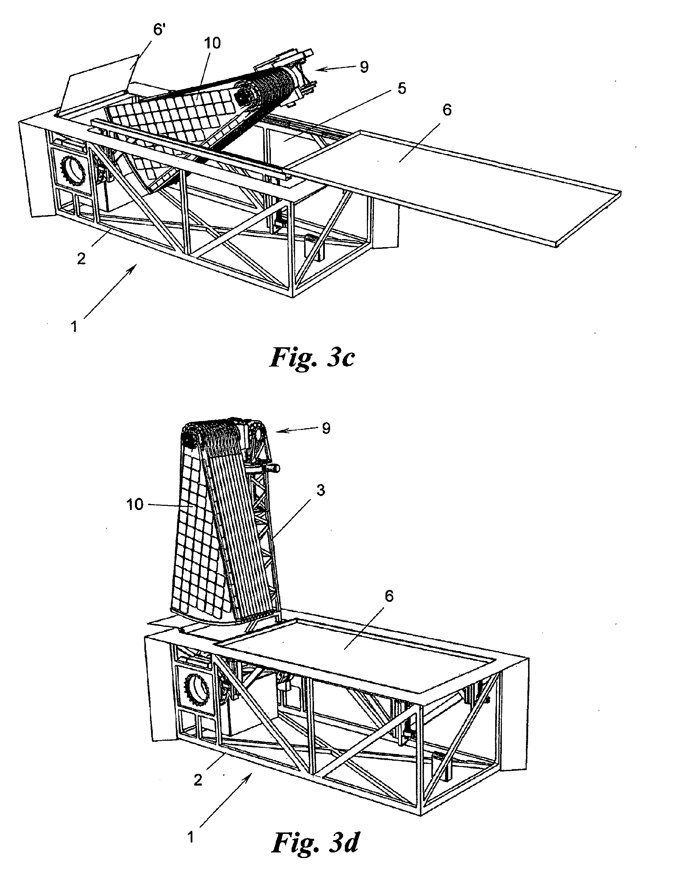

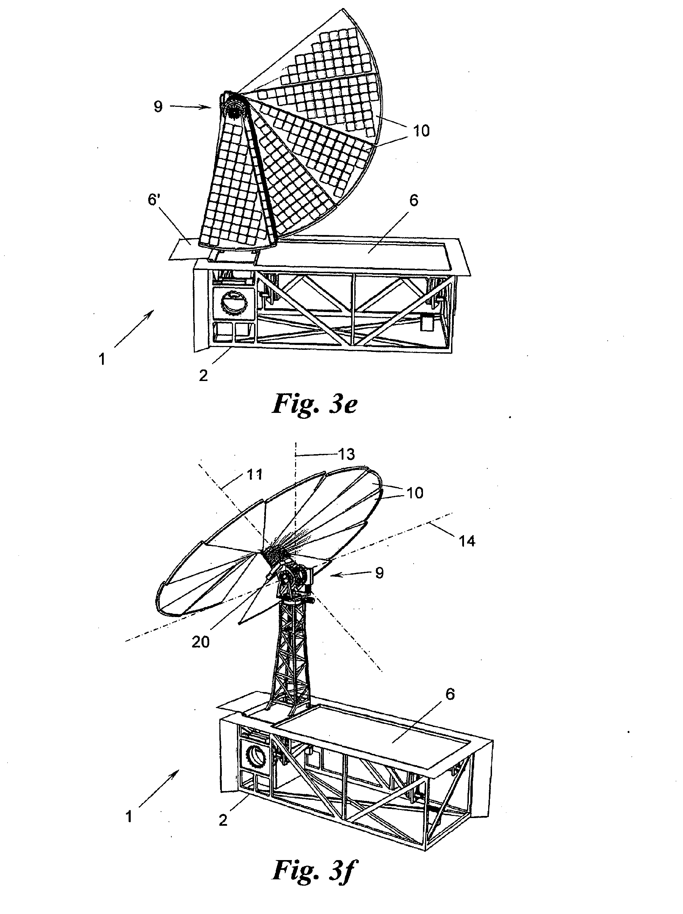

Gemäß den Fig. 1 bis 3 umfaßt ein Solarmodul 1 ein Gehäuse 2, in dem ein länglicher Träger 3 um eine Achse 4 schwenkbar gelagert ist. Das Gehäuse 2 hat etwa die Form einer flachen Schachtel und ist im gezeigten Beispiel in Form eines Fachwerkrahmens ausgebildet. An seiner Oberseite besitzt das Gehäuse 2 eine Öffnung 5, durch welche der Träger 3 beim Aus- und Einfahren hindurchschwenkt (siehe Fig. 3c).

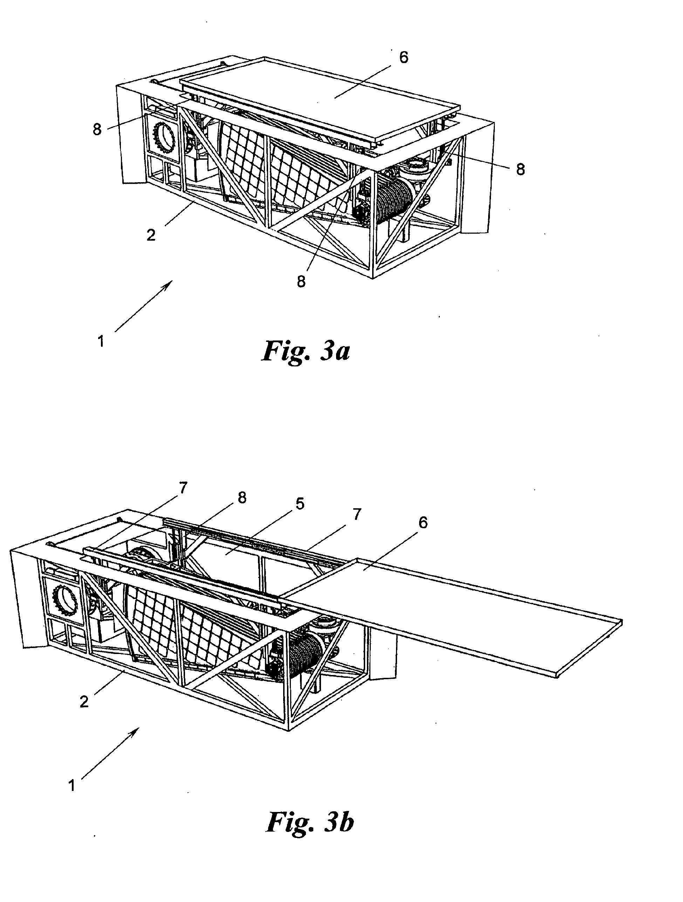

Die Öffnung 5 ist mit zumindest einem Deckel 6 verschlossen, der zum Ausfahren des Trägers 3 aufgeklappt werden kann oder wie im gezeigten Beispiel seitlich weggleiten kann. Zu diesem Zweck ist der Deckel 6 an Führungsschienen 7 gleitend gelagert (siehe Fig. 3b), welche ihrerseits über Linearführungen 8 ein Stück über die Oberseite des Gehäuses 2 angehoben werden können (Fig. 3a), damit der Deckel 6 seitlich über den Rand des Gehäuses 2 hinweggleiten kann.

Nach dem vollständigen Ausschwenken des Trägers 3 kann der Deckel 6 wieder an seinen Platz zurückgleiten (Fig. 3d). Ein Hilfsdeckel 6', welcher die Öffnung 5 an jenem Ort, wo der Träger 3 im ausgefahrenen Zustand hindurchtritt, verschlossen hat, kann in dieser Stellung aufgeklappt offenstehen.

Das Gehäuse 2 kann mit seiner Oberseite flächenbündig in den Erdboden, eine Gebäudefassade oder ein Gebäudedach eingebaut werden. Beim Einbau in den Erdboden ist das Gehäuse 2 bevorzugt als dichte Wanne ausgeführt, um vor Bodenfeuchtigkeit zu schützen. Der Deckel 6 kann eine flache bepflanzbare Wanne bilden, sodaß das Solarmodul 1 in eine Grünfläche integriert werden kann.

Für den flächenbündigen Einbau in eine Gebäudefassade oder in ein Hausdach kann das Gehäuse 2 mit Anschlußteilen zur bündigen Verankerung in einer entsprechenden Öffnung der Fassade oder des Dach versehen werden, beispielsweise mit Befestigungslaschen oder -flanschen (nicht gezeigt).

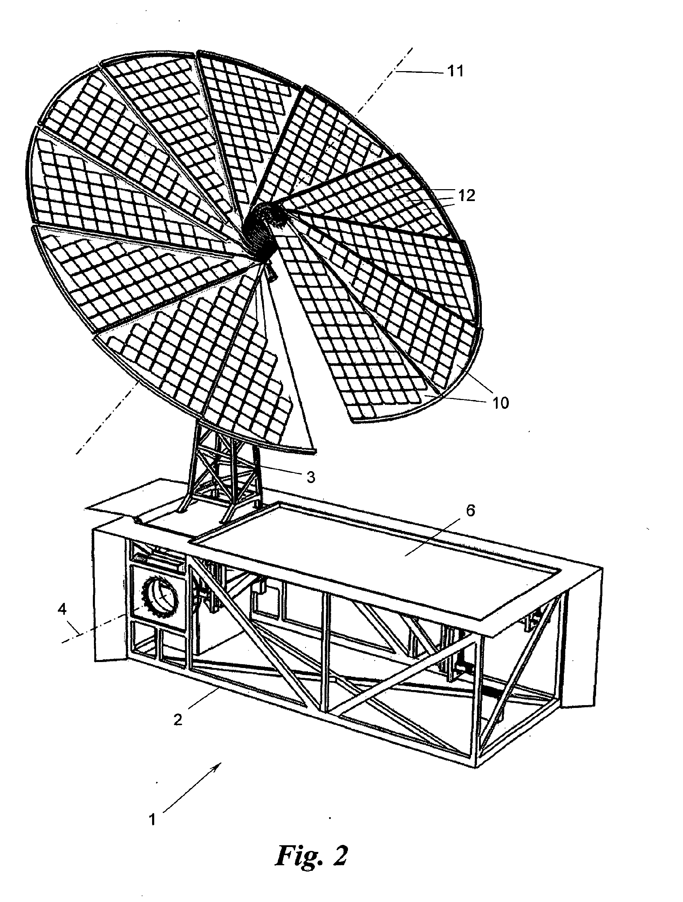

An dem seiner Lagerachse 4 gegenüberliegenden Ende weist der Träger 3 einen Schwenkkopf 9 zur verstellbaren Lagerung eines Satzes lamellenförmiger Solarpaneele 10 auf. Die Solarpaneele 10 sind um eine gemeinsame Achse 11 verschwenkbar am Träger 3, genauer an dessen Schwenkkopf 9, gelagert und können auf diese Weise von einer ersten Stellung, siehe Fig. 1 und 3a - d, in der sie im wesentlichen deckungsgleich übereinander und parallel zum Träger 3 liegen, in eine zweite Stellung, in welcher sie um die Achse 11 aufgefächert sind und damit im wesentlichen nebeneinander liegen, siehe Fig. 2 und 3f, gebracht werden und umgekehrt. Wie ersichtlich besitzen die Solarpaneele 10 bevorzugt Kreissektorform, sodaß sie sich in der aufgefächerten Stellung zu einem Vollkreis ergänzen.

Jedes Solarpaneel 10 ist bei dem gezeigten Beispiel durch ein flächiges Array von photovoltaischen Solarzellen 12 gebildet. Die elektrischen Anschlüsse bzw. Verschaltungen der Solarzellen 12 und Solarpaneele 10 sind zwecks Übersichtlichkeit nicht gezeigt; beispielsweise werden die Solarpaneele 10 über flexible Anschlußkabel oder Schleifkontakte und starre Kontaktringe am Schwenkkopf 9 kontaktiert und an die weitere Energieübertragungselektrik angeschlossen.

Der Schwenkkopf 9 ist um eine vertikale Achse 13 und um eine horizontale Achse 14 schwenkbar am Träger 3 gelagert, sodaß die Achse 11 bzw. die Solarpaneele 10 optimal auf die Sonne ausgerichtet werden können. Zu diesem Zweck kann auch ein von entsprechenden Sonnenstandssensoren (nicht gezeigt) gesteuerter Antrieb zur automatischen Sonnennachführung der Solarpaneele 10 vorgesehen werden, beispielsweise mit Hilfe von Stellantrieben, welche den Schwenkkopf 9 in seinen Rotationsachsen 13, 14 ausrichten.

Diese Stellantriebe können beispielsweise elektromotorgetriebene Schneckentriebe sein, welche auf Zahnkränze einzuwirken, die mit den Achsen 13, 14 gekuppelt sind. Gleichartige Schneckentriebe werden bevorzugt auch zum Aus- und Einschwenken des Trägers 3 und zum Auf- und Einfächern der Solarpaneele 10 eingesetzt.

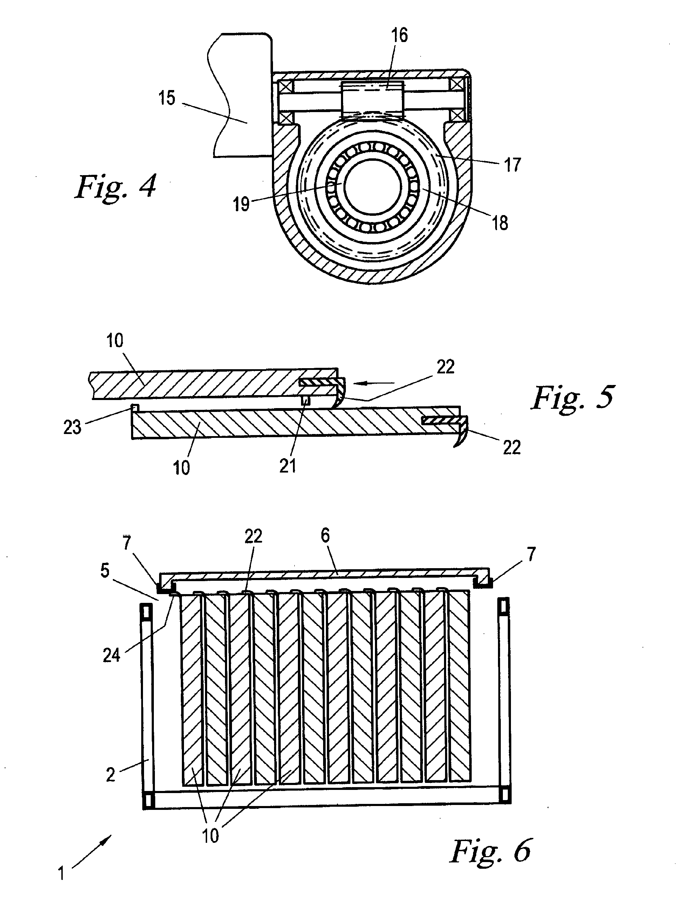

Fig. 4 zeigt einen dieser Antriebe im Detail. Ein Elektromotor 15 treibt eine Schnecke 16 an, die in einen Zahnkranz 17 eingreift, welcher direkt mit dem einen Teil 18 eines Kugellagers gekuppelt ist, dessen anderer Teil 19 ortsfest montiert ist. Der Teil 18 ist mit der jeweils anzutreibenden Komponente gekuppelt, wie dem Träger 3 gegenüber dem Gehäuse 2, dem Schwenkkopf 9 gegenüber dem Träger 3, einem Lagerungsteil 20 des Schwenkkopfs 9 für die Solarpaneele 10 gegenüber dem restlichen Schwenkkopf 9, bzw. den Solarpaneelen 10 gegenüber dem Lagerungsteil 20. Für das Auffächern der Solarpaneele 10 um die Achse 11 genügt es, z.B. nur das oberste oder unterste Solarpaneel 10 anzutreiben, wenn jedes Solarpaneel 10 das darunter- bzw. darüberliegende Solarpaneel 10 über Schlepphaken oder - leisten 21 mitschleppt (Fig. 5).

Das Übereinandergleiten der Solarpaneel 10 bei dieser Schleppbewegung kann für eine Reinigung der Solarpaneele 10 ausgenützt werden. Zu diesem Zweck ist gemäß Fig. 5 jedes Solarpaneel 10 (mit Ausnahme des untersten Solarpaneels 10) auf seiner Rückseite mit einer Kehrlippe 22 ausgestattet, welche beim Auffächern das jeweils darunterliegende Solarpaneel 10 abkehrt. Die Kehrlippe 22 kann beispielsweise eine Gummilippe oder eine Bürstenlippe sein.

Die Kehrlippe 22 kann gleichzeitig die Schleppleiste 21 bilden. Die Schleppleiste 21 schlägt am Ende ihrer Bewegung über das darunterliegende Solarpaneel 10 an einer Anschlagleiste 23 desselben an.

Für das oberste Solarpaneel 10 kann eine im Gehäuse 2 angeordnete weitere Kehrlippe 24 angeordnet werden, beispielsweise an einer Führungsschiene 7, siehe Fig. 6. Die Kehrlippe 24 kehrt das oberste Solarpaneel 10 beim Aus- und Einschwenken des Trägers 3 aus dem Gehäuse 2 ab. Alternativ könnte die weitere Kehrlippe 24 auch am Deckel 6 angeordnet werden und von diesem beim Öffnen des Deckels über das oberste Solarpaneel 10 bewegt werden (nicht dargestellt).

Die Erfindung ist nicht auf die dargestellte Ausführungsform beschränkt, sondern umfaßt alle Varianten und Modifikationen, die in den Rahmen der angeschlossenen Ansprüche fallen. Beispielsweise könnte der Träger 3 statt durch Verschwenken in einer linearen Bewegung aus dem Gehäuse 2 ausfahren, wenn dieses entsprechend gestaltet ist, z.B. hochformatig. Auch kann anstelle des gleitenden Deckels 6 auch ein aufklappbarer Deckel vorgesehen werden, falls zur Vereinfachung gewünscht. Ferner eignet sich das Solarmodul 1 auch zum bevorzugt flächenbündigen Einbau in Dachterrassen oder Oberflächen von Land- und Wasserfahrzeugen, z.B. Dächer von Wohnmobilen und Decks von Schiffen.

## Patentansprüche

1. Solarmodul (1), mit einer Vielzahl von lamellenförmigen Solarpaneelen (10), die um eine gemeinsame Achse (11) verschwenkbar an einem länglichen Träger (3) gelagert und zwischen einer ersten Stellung, in der sie im wesentlichen deckungsgleich und parallel zum Träger (3) übereinanderliegen, und einer zweiten Stellung, in der sie um die genannte Achse (11) aufgefächert im wesentlichen nebeneinanderliegen, bewegbar sind, **dadurch gekennzeichnet, daß** der Träger (3) aus einem Gehäuse (2), welches ihn mit den Solarpaneelen (10) in der ersten Stellung aufnimmt, über eine verschließbare Öffnung (5) desselben ausfahrbar ist, wobei das Gehäuse (2) die Form einer flachen Schachtel hat, an deren Oberseite die genannte Öffnung (5) liegt, und wobei der Träger (3) im Gehäuse (2) schwenkbar gelagert ist und in der eingefahrenen Stellung parallel zur und unter der Oberseite liegt und in der ausgefahrenen Stellung durch die Öffnung (5) hindurchgeschwenkt ist.

2. Solarmodul nach Anspruch 1, **dadurch gekennzeichnet, daß** das Gehäuse (2) eine dichte Wanne zum oberseitig flächenbündigen Einbau in den Erdboden bildet.

3. Solarmodul nach Anspruch 1, **dadurch gekennzeichnet, daß** das Gehäuse (2) mit Mitteln zum oberseitig flächenbündigen Einbau in eine Gebäudefassade oder ein Gebäudedach ausgestattet ist.

4. Solarmodul nach einem der Ansprüche 1 bis 3, **dadurch gekennzeichnet, daß** die Öffnung (5) mit zumindest einem etwa parallel zur Gehäuseoberseite gleitenden Deckel (6) verschließbar ist.

5. Solarmodul nach Anspruch 4, **dadurch gekennzeichnet, daß** der Deckel (6) eine flache bepflanzbare Wanne bildet.

6. Solarmodul nach einem der Ansprüche 1 bis 5, **dadurch gekennzeichnet, daß** zumindest ein Solarpaneel (10) auf seiner Rückseite mit einer beim Auffächern auf dem darunterliegenden Solarpaneel (10) abgleitenden Kehrlippe (22) ausgestattet ist.

7. Solarmodul nach Anspruch 6, **dadurch gekennzeichnet, daß** alle Solarpaneele (10) mit Ausnahme des untersten mit einer solchen Kehrlippe (22) versehen sind.

8. Solarmodul nach einem der Ansprüche 1 bis 7, **dadurch gekennzeichnet, daß** die Öffnung (5) des Gehäuses (2) mit einer beim Ausfahren des Trägers (3) auf dem obersten der übereinanderliegenden Solarpaneele (10) abgleitenden Kehrlippe (24) ausgestattet ist.

9. Solarmodul nach einem der Ansprüche 4 bis 8, **dadurch gekennzeichnet, daß** der Deckel (6) mit einer bei seinem Öffnen auf dem obersten der übereinanderliegenden Solarpaneele (10) abgleitenden Kehrlippe ausgestattet ist.

10. Solarmodul nach einem der Ansprüche 1 bis 9, **dadurch gekennzeichnet, daß** der Träger (3) an seinem einen Ende einen Schwenkkopf (9) zur Lagerung der Solarpaneele (10) aufweist.

11. Solarmodul nach einem der Ansprüche 1 bis 10, **dadurch gekennzeichnet, daß** der Träger (3) und/oder der Schwenkkopf (9), falls ein solcher vorhanden, mit einem sonnenstandgesteuerten Antrieb (15 - 19) zur automatischen Sonnennachführung der Solarpaneele (10) ausgestattet ist/sind.

12. Solarmodul nach einem der Ansprüche 1 bis 11, **dadurch gekennzeichnet, daß** die Solarpaneele (10) mittels eines Elektroantriebs (15 - 19) zwischen ihren Stellungen bewegbar sind und der Träger (3) mittels eines Elektroantriebs (15 - 19) ein- und ausfahrbar ist.

13. Solarmodul nach Anspruch 12, **dadurch gekennzeichnet, daß** die Elektroantriebe (15 - 19) Schneckentriebe (16) aufweisen, welche in Zahnkränze (17) der angetriebenen Achsen (11) eingreifen.

14. Solarmodul nach einem der Ansprüche 1 bis 13, **dadurch gekennzeichnet, daß** jedes Solarpaneel (10) durch ein flächiges Array von photovoltaischen Solarzellen (12) gebildet ist.

## Claims

1. Solar module (1) with a plurality of lamellar solar panels (10), which are mounted on an elongated support to pivot around a common axis and are movable between a first position in which they are superposed to be substantially congruent and parallel to the support, and a second position in which, opened out in a fan formation, they lie substantially adjacent to one another around said axis (11), **characterised in that** the support (3) can be extended via a closable opening (5) out of a housing (2), which receives it with the solar panels (10) in the first position, wherein the housing (2) has the shape of a shallow box with said opening (5) lying on the upper side thereof, and wherein the support (3) is mounted to pivot in the housing (2) and in the retracted position lies parallel to and below the upper side and in the extended position is pivoted through the opening (5).

2. Solar module according to claim 1, **characterised in that** the housing (2) forms a sealed tank for installation into the ground to be flush on the upper side.

3. Solar module according to claim 1, **characterised in that** the housing (2) is fitted with elements for installation into a building facade or a building roof to be flush on the upper side.

4. Solar module according to one of claims 1 to 3, **characterised in that** the opening (5) is closable with at least one cover (6) that slides approximately parallel to the upper side of the housing.

5. Solar module according to claim 4, **characterised in that** the cover (6) forms a shallow plantable tank.

6. Solar module according to one of claims 1 to 5, **characterised in that** at least one solar panel (10) is fitted on its rear side with a sweeping lip (22), which slides along the solar panel (10) below it when opening out in a fan formation.

7. Solar module according to claim 6, **characterised in that** all the solar panels (10) are provided with such a sweeping lip (22) except for the lowest one.

8. Solar module according to one of claims 1 to 7, **characterised in that** the opening (5) of the housing (2) is fitted with a sweeping lip (24), which slides along the uppermost of the superposed solar panels (10) during extension of the support (3).

9. Solar module according to one of claims 4 to 8, **characterised in that** the cover (6) is fitted with a sweeping lip, which slides along the uppermost of the superposed solar panels (10) when it is opened.

10. Solar module according to one of claims 1 to 9, **characterised in that** at its one end the support (3) has a pivot head (9) for mounting the solar panels (10).

11. Solar module according to one of claims 1 to 10, **characterised in that** the support (3) and/or the pivot head (9), if there is one present, is/are fitted with a solar altitude-controlled drive (15-19) for automatic solar tracking of the solar panels (10).

12. Solar module according to one of claims 1 to 11, **characterised in that** the solar panels (10) are movable between their positions by means of an electric drive (15-19) and the support (3) is retractable and extensible by means of an electric drive (15-19).

13. Solar module according to claim 12, **characterised in that** the electric drives (15-19) have worm drives (16), which engage in toothed rings (17) of the driven axes (11).

14. Solar module according to one of claims 1 to 13, **characterised in that** each solar panel (10) is formed by a plane array of photovoltaic solar cells (12).

## Revendications

1. Module solaire (1) avec une multitude de panneaux solaires (10) en forme de lamelles, montés de façon pivotante autour d'un axe commun (11) sur un support longitudinal (3) et déplaçables entre une première position, dans laquelle ils sont sensiblement superposés de façon coïncidente et parallèle au support (3), et une deuxième position, dans laquelle ils sont déployés sensiblement côte à côte autour dudit axe commun (11), **caractérisé en ce que** le support (3) peut être sorti d'un boîtier (2), recevant celui-ci avec les panneaux solaires (10) dans la première position, à travers une ouverture refermable (5) de celui-ci, le boîtier (2) présentant la forme d'une boîte plate dans la face supérieure de laquelle se trouve ladite ouverture (5), et le support (3) étant monté de façon pivotante dans le boîtier (2) et disposé parallèlement à la face supérieure et en dessous de celle-ci dans la position rétractée, et pivoté à travers l'ouverture (5) dans la position sortie.

2. Module solaire selon la revendication 1, **caractérisé en ce que** le boîtier (2) forme une cuve étanche destinée à être encastrée dans le sol, en affleurement avec celui-ci du côté supérieur.

3. Module solaire selon la revendication 1, **caractérisé en ce que** le boîtier (2) est doté de moyens pour l'encastrement en affleurement avec la surface supérieure dans une façade de bâtiment ou un toit de bâtiment.

4. Module solaire selon l'une des revendications 1 à 3, **caractérisé en ce que** l'ouverture (5) peut être fermée avec au moins un couvercle (6) coulissant approximativement parallèlement à la face supérieure du boîtier.

5. Module solaire selon la revendication 4, **caractérisé en ce que** le couvercle (6) forme une cuve plate cultivable.

6. Module solaire selon l'une des revendications 1 à 5, **caractérisé en ce qu'**au moins un panneau solaire (10) est doté d'une lèvre balayeuse (22) sur son côté arrière, laquelle glisse sur le panneau solaire (10) sous-jacent lors du déploiement.

7. Module solaire selon la revendication 6, **caractérisé en ce que** tous les panneaux solaires (10) à l'exception de celui du bas sont dotés d'une telle lèvre balayeuse (22).

8. Module solaire selon l'une des revendications 1 à 7, **caractérisé en ce que** l'ouverture (5) du boîtier (2) est dotée d'une lèvre balayeuse (24) glissant sur le panneau solaire le plus haut des panneaux solaires (10) superposés lors de la sortie du support (3).

9. Module solaire selon l'une des revendications 4 à 8, **caractérisé en ce que** le couvercle (6) est doté d'une lèvre balayeuse glissant sur le panneau solaire (10) le plus haut des panneaux solaires superposés lors de l'ouverture du couvercle.

10. Module solaire selon l'une des revendications 1 à 9, **caractérisé en ce que** le support (3) comporte, à l'une de ses extrémités, une tête pivotante (9) pour le support des panneaux solaires (10).

11. Module solaire selon l'une des revendications 1 à 10, **caractérisé en ce que** le support (3) et/ou la tête pivotante (9), si présente, est/sont doté(s) d'un entraînement (15 - 19) commandé en fonction de la position du soleil, pour orienter automatiquement les panneaux solaires (10) vers le soleil.

12. Module solaire selon l'une des revendications 1 à 11, **caractérisé en ce que** les panneaux solaires (10) sont déplaçables entre leurs positions au moyen d'un entraînement électrique (15 - 19), et le support (3) peut être rétracté ou sorti au moyen d'un entraînement électrique (15 - 19).

13. Module solaire selon la revendication 12, **caractérisé en ce que** les entraînements électriques (15 - 19) comportent des entraînements à vis sans fin (16), lesquels s'engagent dans des couronnes dentées (17) des axes (11) entraînés.

14. Module solaire selon l'une des revendications 1 à 13, **caractérisé en ce que** chaque panneau solaire (10) est formé par un ensemble réseau de cellules solaires photovoltaïques (12).
